# FASCICULE DE BREVET EUROPEEN

(11) **EP 2 499 855 B1**
(45) Date de publication et mention de la délivrance du brevet: **16.05.2018**
(21) Numéro de dépôt: 10798169.8
(22) Date de dépôt: 10.11.2010
(51) Int. Cl.: H04W 12/06, H04W 72/04

(54) **PROCÉDÉ D'ALLOCATION DE RESSOURCES DE TRANSMISSION DE DONNÉES, PROCÉDÉ DE BASCULEMENT, POINT D'ACCÈS, TERMINAL, PROGRAMME D'ORDINATEUR ET SIGNAL CORRESPONDANTS**
METHODE DER ZUTEILUNG VON RESSOURCEN FÜR DIE DATENÜBERTRAGUNG, VERFAHREN ZUM UMSCHALTEN, ACCESS POINT, TERMINAL, COMPUTERPROGRAMM UND SIGNAL
METHOD OF ALLOCATION OF RESOURCES FOR DATA TRANSMISSION, METHOD FOR SWITCHING, ACCESS POINT, TERMINAL, COMPUTER PROGRAM AND SIGNAL

(30) Priorité: 12.11.2009 FR 0957979
(43) Date de publication de la demande: 19.09.2012
(60) Demande divisionnaire: 12184910.3
(73) Titulaire: Orange, 75015 Paris (FR)
(72) Inventeur: CARIOU, Laurent, F-35700 Rennes (FR); CHRISTIN, Philippe, F-35000 Rennes (FR); BERNARD, David, F-35560 Marcille Raoul (FR)
(74) Mandataire: Vidon Brevets & Stratégie
(86) Numéro de dépôt international: PCT/FR2010/052411
(87) Numéro de publication internationale: WO 2011/058275

(56) Documents cités:
- US-A1- 2004 185 887
- US-A1- 2004 264 475
- US-A1- 2006 291 432

## Description

### 1. Domaine de l'invention

Le domaine de l'invention est celui des communications radiofréquences, et plus particulièrement de la gestion des ressources en fréquence entre des terminaux, ou stations, et un point d'accès à un réseau de communication. L'invention s'applique notamment, mais non exclusivement, à des équipements d'un réseau local sans fil, et par exemple aux systèmes émettant dans une bande de fréquence située autour de 2,4 GHz ou de 5 GHz, dans lesquelles fonctionnent notamment des équipements selon la norme IEEE 802.11n ou ses versions révisées, encore appelée Wi-Fi.

On entend donc ici par équipement notamment un élément appartenant à un ensemble de services de base (en anglais BSS pour *« basic service set* »), formé par un point d'accès (en anglais AP « *access point »*), ou un coordinateur de réseau personnel sans fil (en anglais PNC pour *«PicoNet Coordinator* »), et les stations associées à ce point d'accès, c'est-à-dire les stations situées dans la zone de couverture de ce point d'accès.

Plus précisément, l'invention concerne la gestion des ressources d'un point d'accès capable de transmettre simultanément sur au moins deux canaux, et plus particulièrement un mécanisme d'allocation, ou affectation, de ressources de transmission de données et un mécanisme de basculement d'un terminal entre deux canaux.

### 2. Art antérieur

On décrit ci-après la gestion des ressources en fréquence d'équipements d'un réseau fonctionnant notamment selon une technologie Wi-Fi telle que définie dans la norme IEEE 802.11r proposant un transfert rapide (en anglais « *Fast BSS transition »*) d'une station entre un premier ensemble de services de base géré par un premier point d'accès et un deuxième ensemble de services de base géré par un deuxième point d'accès distinct.

Selon cette norme, un point d'accès gère un unique canal donné. Un mécanisme est proposé afin de permettre un basculement d'une transmission de données d'un point d'accès à un autre point d'accès, et donc en général avec un changement de canal en cas de mobilité du terminal. En d'autres termes ce standard IEEE 802.11r permet un basculement d'une transmission de données, le terminal concerné devant alors s'associer à un nouveau point d'accès gérant un nouveau canal.

Ce mécanisme de basculement comprend plusieurs phases de traitement, longues et complexes. En effet, le terminal basculant doit « découvrir » le nouveau point d'accès, s'authentifier et s'associer à ce point d'accès notamment par échange et reconnaissance de clés de cryptage.

Malgré les gains apportés par cette technique où la durée de préparation de la transition (jusqu'à quelques secondes) est anticipée, il reste néanmoins une durée de transition de l'ordre de 50 ms. Une telle durée de basculement introduit une interruption momentanée de service, qui n'est pas acceptable pour de nombreuses applications, et par exemple pour la transmission d'une vidéo.

Dans un cas de perturbation du canal radio par un radar, il a été envisagé qu'un point d'accès puisse changer de canal dans la même bande de fréquence, pour éviter de perturber les transmissions radar considérées comme prioritaires. En effet, dans ce cas, un basculement de canal peut être mis en oeuvre par un même point d'accès. A cet effet, le standard 802.11h spécifie notamment des adaptations pour la gestion, en Europe, du spectre et de la puissance de transmission relatives aux réseaux informatiques utilisant une liaison sans fil dans la bande de fréquences des 5 GHz. La norme prévoit par exemple des mécanismes de sélection dynamique de fréquence et de contrôle de la puissance de transmission (en anglais « *Spectrum and Transmit Power Management Extensions in the 5 GHz band* »).

En particulier, selon cette norme, le mécanisme de sélection dynamique de fréquence (en anglais DFS, pour « *Dynamic Frequency Selection* ») est basé sur une trame de gestion du basculement qui annonce le changement de canal (en anglais « *Charnel Switch Announcement* »). Ainsi, un point d'accès décidant de lancer une procédure de basculement de canal, envoie cette trame de gestion spécifique avec un accès au canal prioritaire (canal libre pendant une durée spécifique notée « PIFS » pour « *Point coordination fonction Inter-Frame Spacing* » en anglais). Cette trame contient notamment le numéro du nouveau canal et le temps à décompter avant le changement. Ce temps est exprimé en nombre de « balises » (en anglais « *beacon »*).

Une balise est une trame de gestion contenant toutes les informations du réseau de communication, en particulier les informations du canal sur lequel elles sont transmises périodiquement par le point d'accès. Elles jouent un rôle d'estampillage, et synchronisent tous les terminaux d'un même canal, rattachés au point d'accès. Les intervalles de temps (en anglais « *Beacon Interval* »), qui séparent l'émission de deux balises successives sont paramétrés par le point d'accès. Par ailleurs, ces balises contiennent des informations permettant de connaître les caractéristiques des ensembles de services de base proposés par le point d'accès, par exemple l'identité du point d'accès (BSSID, en anglais « *Basic Service Set Identification* »), la bande de fréquence, le numéro du canal dans cette bande de fréquence, les options supportées par les couches PHY/MAC.

Ce standard offre l'avantage d'interrompre pendant un temps très court les transmissions, car les stations retrouvent le même point d'accès dans le nouveau canal, sans nouvelle authentification, ni nouvelle association. Cependant, cette approche permet uniquement un changement de canal dans une même bande de fréquence.

En outre, cette approche n'est pas multicanal, car un point d'accès est toujours, à un instant donné, associé à un seul canal. En effet, l'inconvénient de cette technique selon le standard 802.11h est qu'elle entraîne le basculement de canal de tous les terminaux rattachés au point d'accès. En d'autres termes, si une action de changement de canal est lancée, l'intégralité des flux gérés par le point d'accès est déroutée sur un autre canal. Il n'est pas possible d'effectuer une répartition de la charge entre différents canaux, pour un point d'accès considéré.

La demande de brevet américain US 2004/185887 concerne un noeud de réseau sans fil dans un contexte multicanal, le réseau comprenant au moins deux émetteurs-récepteurs réglés statiquement sur des canaux à fréquences non-interférents. L'inconvénient de cette technique réside dans le fait qu'à chaque changement de canal une procédure d'association et d'authentification doit être effectuée, allongeant en conséquence la durée d'interruption de transmission lors du basculement de canal ou de bande. <page3bis>

Il existe donc un besoin d'une solution permettant d'accélérer ces changements de canaux pour le cas des points d'accès multi-canaux en vue des projets actuels. En effet, une situation de canaux asynchrones gérés par des mécanismes différents est actuellement envisagée dans la future norme IEEE 802.11ac actuellement en cours d'élaboration.

Cette future norme vise l'utilisation de canaux radiofréquences de plus en plus larges, présentant une largeur par exemple égale à 80 MHz (correspondant à l'agrégation de quatre canaux de 20 MHz) ou plus.

Ainsi, la figure la illustre ce mécanisme pour un canal souhaité de largeur 20 MHz, 40 MHz, 60 MHz ou 80 MHz, pouvant être constitué selon une alternative par quatre canaux adjacents de 20 MHz. Pour ce faire, ce mécanisme définit un canal primaire sur lequel un mode d'accès CSMA-CA (en anglais « *Carrier Sense Multiple Access-Collision Avoidance* »), tel que décrit dans la norme 802.11-2007, paragraphe 9.1 *« MAC architecture* », 9.1.1 « *DCF* » est appliqué ainsi que l'envoi d'une balise par un point d'accès gérant en outre un canal dit secondaire (*« Secondary Channel »* en anglais), un canal tertiaire (*« Tertiary Channel »* en anglais) et un canal dit quaternaire (*« Quaternary Channel »* en anglais). Selon cette alternative, le mode d'accès CSMA-CA n'est mis en oeuvre que sur le canal primaire les trois autres canaux étant synchronisés sur ce canal primaire, c'est-à-dire fonctionnant selon le même mode d'accès.
Le document US2004/0264475A1 décrit une architecture d'un système multi-canal CSMA utilisant le protocole 802.11 comprenant pour chaque station ou point d'accès du système, un mécanisme MAC comprenant une pluralité de files de transmission, un mécanisme de sélection d'une file de transmission, une couche physique comprenant plusieurs canaux de transmission. Une station ou un point d'accès d'un tel système comprend un récepteur comprenant une mémoire via laquelle des paquets reçus en provenance de la couche physique sont réordonnés. Selon cette architecture, afin de transmettre un paquet selon un chemin de transmission optimal, le mécanisme de sélection du mécanisme MAC sélectionne une file de transmission et une couche physique de transmission optimales.

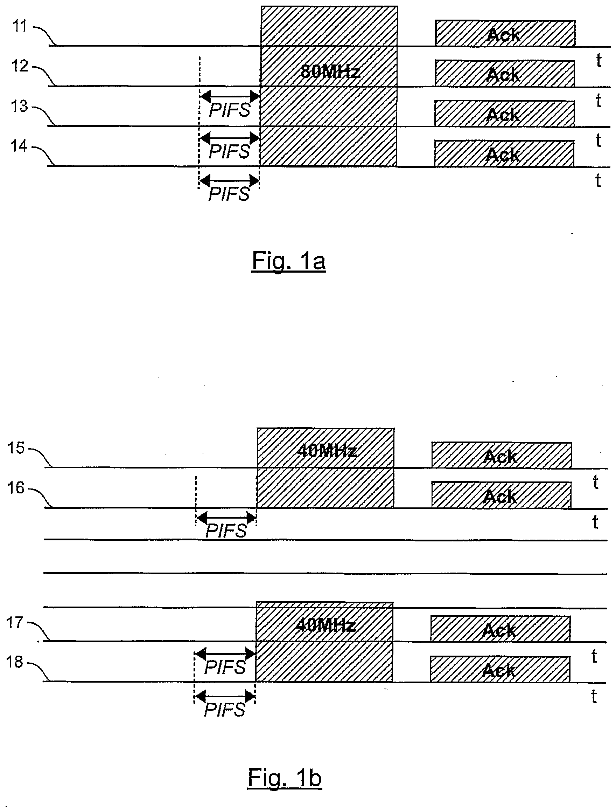

Cependant, cette future norme prévoit qu'il peut s'avérer difficile de trouver une bande de 80 MHz libre dans la bande disponible et propose une alternative, illustrée par la figure 1b, pour transmettre à 80 MHz en créant deux canaux désynchronisés et séparés en fréquence, qui sommés ensemble forme un canal de 80 MHz. Ainsi, selon cette alternative représentée sur la figure 1b, les deux canaux désynchronisés sont des canaux de 40 MHz composés chacun d'un canal primaire (1 et 2) et d'un canal secondaire (1 et 2). Sur chacun des canaux primaires 1 et 2, on utilise alors deux modes d'accès distincts et des balises distinctes, l'ensemble étant géré par un unique point d'accès possédant alors une fonctionnalité multicanal.

Par ailleurs, la future norme IEEE 802.11ad également en cours de normalisation porte sur un système Wi-Fi fonctionnant à 60 GHz et introduit la possibilité de basculer entre la bande de fréquence à 60 GHz et la bande de fréquence à 5 GHz. Cette future normalisation requiert également un basculement rapide et fluide sans altération d'une éventuelle transmission en cours, que les canaux à 60 GHz et à 5 GHz soient synchronisés ou non.

Dans ce contexte particulier relatif aux futures normalisations, les inventeurs ont donc identifié un besoin pour une nouvelle technique permettant d'optimiser l'allocation de ressources et les basculements d'un canal à un autre de manière fluide et rapide, que les canaux soient synchrones (c'est-à-dire gérés par le même mode d'accès) ou asynchrones (c'est-à-dire gérés par des modes d'accès distincts d'un canal à un autre), et que ces canaux soient ou non contigus.

### 3. Exposé de l'invention

L'invention propose une solution nouvelle qui ne présente pas l'ensemble de ces inconvénients de l'art antérieur, sous la forme d'un procédé d'allocation de ressources de transmission de données dans un réseau de communication comprenant au moins un point d'accès échangeant des données avec au moins un terminal lui étant rattaché et gérant un ensemble d'au moins deux canaux de communication.

Selon l'invention, le point d'accès met en oeuvre une phase d'association et d'authentification d'un terminal avec ledit point d'accès, comprenant une étape d'association audit terminal d'un identifiant unique dans ledit point d'accès.

Le point d'accès met également en oeuvre une phase de gestion dudit ensemble de canaux, utilisant une table de référence associant à un terminal, identifié par son identifiant unique, un desdits canaux. Ladite phase de gestion comprend en outre les étapes suivantes :
- détection d'un basculement d'un terminal rattaché audit point d'accès, depuis un premier canal, dit canal d'origine, vers un second canal, dit canal de destination ;
- mise à jour de ladite table de référence pour associer l'identifiant unique dudit terminal audit canal de destination.

Ainsi, l'invention repose sur une approche nouvelle et inventive de l'allocation de canaux, dans un point d'accès multicanal, selon laquelle au moins certains paramètres, et notamment l'identifiant d'un terminal, sont mutualisés entre tous les canaux associés au point d'accès, En d'autres termes, l'identifiant est indépendant du canal utilisé à un instant donné. La procédure d'association et d'authentification d'un terminal ne se fait pas, comme cela est le cas selon l'art antérieur, avec un canal particulier, mais avec le point d'accès (et donc pour l'ensemble des canaux qu'il gère). Cette approche permet d'accélérer un changement de canal, puisqu'il n'est plus nécessaire de lancer une nouvelle procédure d'association et d'authentification à chaque changement de canal. Ainsi, un changement de canal peut se faire dans un temps suffisamment court, sans interruption de service.

Pour gérer les différents canaux de communication qu'il a en charge, le point d'accès dispose d'une table de référence associant l'identifiant unique d'un terminal avec le canal courant (ou canal d'origine) associé à ce terminal. Cette table, qui doit s'interpréter ici dans le sens large d'un outil associant des informations (sous la forme de liste, de base de données, ...), permet de gérer un changement de canal pour un terminal particulier, sans que les autres terminaux associés au point d'accès soient affectés.

Lorsque le point d'accès détecte un basculement effectif (qui peut être effectué suite à une requête émise par le point d'accès ou suite à une décision du terminal, selon les différents modes de réalisation de l'invention, comme expliqué ci-après) d'un terminal sur un autre canal, il met à jour cette table de référence en conséquence.

Selon un mode de réalisation particulier, ladite phase d'association et d'authentification comprend également une étape d'échange d'au moins une clé de cryptage entre ledit point d'accès et ledit terminal, la ou lesdites clés de cryptage étant communes pour ledit ensemble de canaux.

Ainsi, selon ce mode de réalisation de l'invention, l'échange de clés de cryptage entre le point d'accès et le terminal est valide quel que soit le canal associé au terminal. Ainsi, les clés de cryptage échangées à l'origine restent en vigueur après un basculement. Le terminal étant identifié et authentifié par le point d'accès et l'ensemble des canaux gérés par celui-ci, il n'est pas nécessaire de procéder à un nouvel échange de clés en cas de basculement, ce qui permet également d'améliorer le temps de basculement.

Selon une caractéristique particulière de l'invention, le procédé comprend en outre, dans ledit point d'accès, une étape d'émission sur ledit canal d'origine d'une commande de changement de canal alloué à un terminal rattaché audit point d'accès, ladite commande de changement de canal alloué comprenant au moins ledit identifiant du terminal et un identifiant dudit canal de destination.

Ainsi, selon ce mode de réalisation de l'invention, c'est le point d'accès qui décide de l'opportunité d'un changement de canal pour l'un des terminaux dont il a la charge, en fonction par exemple d'une analyse des charges respectives des canaux et/ou des besoins des terminaux. Il émet alors une commande de changement de canal alloué spécifique à l'attention du terminal, les affectations n'étant pas modifiées pour les autres terminaux.

En d'autres termes, un point d'accès peut demander à un terminal de changer de canal, sans que, nécessairement, les autres terminaux du système transmettant sur ce même canal soient obligés de basculer également.

Dans certaines mises en oeuvre, il est bien sûr possible qu'une telle commande affecte simultanément plusieurs terminaux, voire en cas de besoin tous les terminaux d'un canal donné.

Par exemple, un point d'accès détectant une surcharge sur un canal particulier peut décider de faire changer de canal une partie seulement des terminaux transmettant sur ce canal, de façon à décharger le canal en question.

Comme déjà précisé, ce changement de canal peut se faire très rapidement, puisqu'il ne nécessite pas de renégociation de paramètres au niveau du canal de destination, ceux-ci étant mutualisés au niveau du point d'accès, c'est-à-dire communs à l'ensemble des canaux gérés par ce point d'accès.

Selon un aspect particulier de l'invention, la commande de changement de canal comprend un champ de désignation des terminaux concernés, comprenant une pluralité de bits associés chacun à l'un des terminaux, et prenant une première valeur lorsque le terminal doit effectuer le basculement vers le canal de destination et une seconde valeur lorsqu'il doit conserver le canal d'origine.

Ainsi, on ajoute à la commande de basculement de canal un champ « bitmap » de désignation des terminaux concernés, ce qui permet une détection rapide et simple dans les terminaux.

Selon une autre variante de l'invention, le procédé comprend en outre une phase de synchronisation des canaux d'origine et de destination, comprenant une étape d'émission simultanée d'une première balise sur ledit canal d'origine et d'une seconde balise sur ledit canal de destination.

Par balise (en anglais « *beacon »*) on fait ici référence notamment à une trame de gestion (par exemple selon le standard IEEE 802.11) qui contient des informations du réseau de communication. Par exemple, les informations d'un canal sont l'identité du point d'accès (BSSID, en anglais « *Basic Service Set Identification* »), la bande de fréquence, le numéro du canal dans cette bande de fréquence, les options supportées par les couches PHY/MAC. Ces balises sont transmises périodiquement par le point d'accès sur chaque canal. Cependant, ces canaux n'étant pas systématiquement synchronisés, les balises ne sont pas non plus synchronisées.

Selon ce mode de réalisation de l'invention, on prévoit donc une synchronisation des balises, au moins au moment où un basculement est souhaité. Ainsi, le point d'accès synchronise au moins les deux canaux concernés. En d'autres termes, les balises de chaque canal sont envoyées sur chaque canal avec le même instant de départ.

De cette manière, lorsqu'un point d'accès demande à un terminal de changer de canal, il le fait juste avant l'émission des balises, de sorte que le terminal changeant de canal reçoit la balise du canal d'origine et la balise du canal de destination juste après son basculement sur ce dernier. Ainsi, le changement de canal est accéléré du fait que le terminal changeant de canal n'aura pas à attendre la balise du canal de destination pour poursuivre sa transmission.

Selon un autre mode de réalisation, le procédé selon l'invention comprend en outre une étape d'émission, dudit point d'accès vers au moins un terminal rattaché audit point d'accès, sur ledit canal d'origine, d'au moins une information relative à l'état d'au moins un canal distinct dudit canal d'origine.

Dans ce mode de réalisation, un terminal peut décider de lui-même de changer de canal, sans en avoir reçu l'ordre du point d'accès. En effet, il est informé de l'état, et notamment de la charge et/ou des disponibilités, d'au moins un autre canal (de préférence de tous les canaux associés au point d'accès), et peut donc déterminer si un basculement est nécessaire, ou souhaitable, en fonction de ses besoins actuels et/ou à venir.

Avantageusement, ladite au moins une information relative à l'état d'au moins un canal distinct dudit canal d'origine est transmise par encapsulation dans une balise dudit canal d'origine.

L'invention permet ainsi, selon ce mode de réalisation, un basculement de canal quasi-instantané. En effet, sur le canal d'origine de transmission, on émet, dans la balise du canal d'origine, des informations relatives aux autres canaux, par exemple les balises (ou une partie des informations des balises) pour chaque canal de destination potentielle. Grâce à cette encapsulation, chaque terminal est averti de l'état du canal de transmission d'origine mais également de l'état des autres canaux de destination potentielle. En conséquence, puisque le terminal a été préalablement averti de l'état du canal de destination, la phase de basculement de canal peut être quasi-instantanée.

En d'autres termes, le terminal est constamment au courant des caractéristiques des canaux de destination potentielle. Ainsi, lorsqu'il reçoit du point d'accès sur le canal d'origine une commande de changement de canal alloué, le terminal n'a pas besoin d'attendre la balise du canal de destination préalablement synchronisée avec la balise du canal d'origine pour basculer sur le canal de destination. En effet, contrairement à l'art antérieur, il peut basculer immédiatement après avoir reçu la commande de changement de canal alloué, puisqu'il dispose simultanément de la balise du canal d'origine et de la balise de destination.

Selon cette approche, il est également possible au point d'accès de demander à tout moment à un terminal de changer de canal (en précisant le canal de destination ou en laissant le terminal déterminer son canal de destination), sans nécessairement attendre d'émettre la commande de changement de canal alloué juste avant l'émission des balises. On gagne en conséquence le temps d'attente de la balise du canal de destination (synchronisée avec la balise du canal d'origine).

Dans un autre mode de réalisation, l'invention concerne également un procédé de basculement de transmission de données d'un canal d'origine vers un canal de destination, dans un terminal associé à un point d'accès d'un réseau de communication, ledit point d'accès gérant un ensemble d'au moins deux canaux de communication.

Selon l'invention, un tel procédé comprend, dans ledit terminal, une phase d'association et d'authentification avec ledit point d'accès, comprenant une étape d'obtention d'un identifiant unique dans ledit point d'accès, et une phase de gestion du basculement mettant en oeuvre les étapes suivantes :
- détermination d'un canal de destination géré par ledit point d'accès, par traitement d'au moins une information reçue dudit point d'accès ;
- basculement de la transmission de données dudit canal d'origine vers ledit canal de destination déterminé, sans modification dudit identifiant.

Ainsi, selon ce mode de réalisation de l'invention, un terminal peut basculer une transmission courante sur un canal de destination, sans renégociation au niveau du canal de destination d'un nouvel identifiant, et le cas échéant d'autres paramètres tels que des clés de cryptage.

A partir du traitement des informations reçues du point d'accès, le terminal peut effectuer directement le basculement, en tenant compte uniquement des informations de synchronisation (balises) nécessaires.

Selon un deuxième mode de réalisation, le terminal détecte la nécessité de changer de canal (canal d'origine surchargé ou besoin de plus de ressources) et décide donc de basculer. Il traite l'information reçue du point d'accès qui lui permet d'avoir connaissance des canaux gérés par le point d'accès gérant également le canal d'origine, ce qui lui permet de sélectionner un canal de destination disponible. Par exemple, l'information reçue du point d'accès correspond aux balises de chaque canal de destination potentielle. Le terminal bascule ensuite sa transmission courante sur ce canal de destination sélectionné.

Selon un aspect particulier de l'invention, ladite information reçue dudit point d'accès comprend une commande de changement de canal alloué audit terminal, comprenant au moins une information d'identification dudit terminal et un identifiant dudit canal de destination.

Ainsi, le terminal reçoit donc un « ordre » de basculement, ou commande de changement de canal alloué émise par le point d'accès à son attention, et traite cette commande en vérifiant tout d'abord s'il est concerné par la commande (en analysant un champ « bitmap » prévu à cet effet, dans un mode de réalisation particulier), et bascule en conséquence sur le canal de destination sélectionné par le point d'accès et spécifié dans la commande de basculement.

Selon une autre variante, le procédé comprend en outre, dans ledit terminal, les étapes suivantes :
- réception, sur ledit canal d'origine, d'au moins une information relative à l'état d'au moins un autre canal géré par ledit point d'accès ;
- décision de basculement dudit canal d'origine vers un canal de destination, en fonction de ladite au moins une information relative à l'état d'au moins un autre canal.

Cette information peut notamment être une balise, ou une partie de balise, des autres canaux. Selon un mode de réalisation particulier, elle est transmise encapsulée dans une balise du canal d'origine, ce qui simplifie la synchronisation du basculement.

A l'aide de ces informations, le terminal peut décider de lui-même, sans en avoir reçu l'ordre de la part du point d'accès, d'effectuer un basculement, si ceci lui apparaît souhaitable ou nécessaire, en fonction de ses besoins actuels et/ou à venir.

Dans un autre mode de réalisation, l'invention concerne un point d'accès dans un réseau de communication, échangeant des données avec au moins un terminal lui étant rattaché, et gérant un ensemble d'au moins deux canaux de communication. Un tel point d'accès comprend des moyens d'association et d'authentification d'un terminal avec ledit point d'accès; associant audit terminal un identifiant unique dans ledit point d'accès, et des moyens de gestion dudit ensemble de canaux, mettant en oeuvre une table de référence associant à un terminal, identifié par son identifiant unique, un desdits canaux, et comprend également :
- des moyens de détection d'un basculement d'un terminal rattaché audit point d'accès, depuis un premier canal, dit canal d'origine, vers un second canal, dit canal de destination ;
- des moyens de mise à jour de ladite table de référence pour associer l'identifiant unique dudit terminal audit canal de destination.

Un autre aspect de l'invention concerne un terminal d'un réseau de communication, échangeant des données avec un point d'accès auquel il est rattaché, sur un canal de communication, dit canal d'origine, choisi dans un ensemble d'au moins deux canaux de communication, gérés par ledit point d'accès.

Un tel terminal comprend des moyens d'association et d'authentification avec ledit point d'accès, comprenant des moyens d'obtention d'un identifiant unique dans ledit point d'accès, et des moyens de gestion du basculement mettant en oeuvre :
- des moyens de détermination d'un canal de destination géré par ledit point d'accès, par traitement d'au moins une information reçue dudit point d'accès ;
- des moyens de basculement de la transmission de données dudit canal d'origine vers ledit canal de destination déterminé, sans modification dudit identifiant.

L'invention concerne également un programme d'ordinateur comportant des instructions pour la mise en oeuvre d'un procédé d'allocation de ressource de transmission de données ou d'un procédé de basculement de transmission de données tels que décrits précédemment lorsque ce programme est exécuté par un processeur.

En outre, l'invention concerne un signal échangé entre un point d'accès et au moins un terminal pour la mise en oeuvre d'un procédé d'allocation de ressource de transmission de données ou d'un procédé de basculement de transmission de données tels que décrits précédemment. Selon l'invention, un tel signal porte des données associant sélectivement au moins un terminal à au moins un canal de destination.

Comme précisé ci-dessus, l'invention se caractérise en effet par le fait que le changement de canal ne se fait pas nécessairement pour l'ensemble des terminaux associés à un canal, mais peut se faire au contraire spécifiquement pour un (ou plusieurs) terminaux identifiés.

Avantageusement, un tel signal comprend en outre au moins un des éléments appartenant au groupe comprenant :
- un champ désignant au moins un terminal concerné par une commande de basculement de canal ;
- une balise d'un canal d'origine encapsulant au moins une partie d'au moins une balise d'au moins un autre canal distinct dudit canal d'origine.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures la et 1b, déjà commentées en relation avec l'art antérieur, illustrent deux exemples de mécanismes connus d'attribution de canaux ;
- la figure 2 présente les principales étapes du procédé d'allocation mis en oeuvre dans un point d'accès selon un mode de réalisation de l'invention ;
- la figure 3 présente la structure d'une commande de changement de canal alloué selon un mode de réalisation de l'invention ;
- la figure 4 illustre en détail l'étape particulière de « synchronisation » de deux canaux asynchrones du procédé d'allocation représenté en relation avec la figure 2 ;
- les figures 5a à 5c illustrent deux variantes de l'invention visant à délivrer une information relative à l'état d'au moins un canal distinct du canal d'origine ;
- la figure 6 présente les principales étapes du procédé de basculement dans un terminal associé à un point d'accès selon un mode de réalisation de l'invention ;
- les figures 7a et 7b illustrent respectivement la structure d'un point d'accès et d'un terminal selon un mode de réalisation de l'invention.

### 5. Description d'un mode de réalisation de l'invention

### 5.1 Principe général

Le principe général de l'invention repose donc sur la mutualisation de certains paramètres, notamment l'identifiant d'un terminal pour tous les canaux associés à un même point d'accès.

Ainsi, la procédure d'association et d'authentification d'un terminal se fait une unique fois avec le point d'accès et n'a pas besoin d'être réitérée à chaque changement de canal.

En conséquence, un changement de canal peut se faire dans un temps suffisamment court sans interruption d'une transmission courante sur un terminal changeant de canal. En outre, un tel changement de canal n'impacte pas nécessairement l'ensemble des terminaux rattachés au point d'accès émettant sur le même canal.

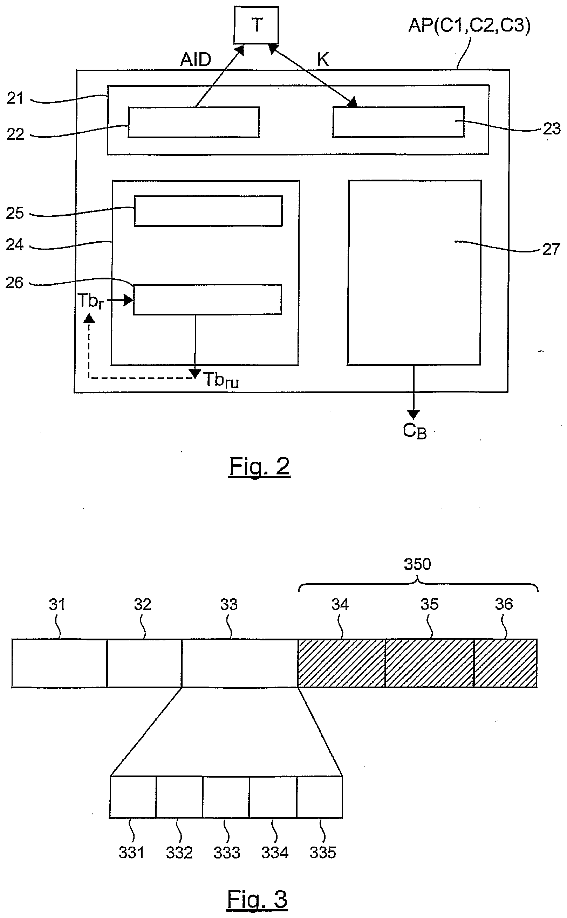

Ainsi, comme illustré en figure 2, le procédé d'allocation de ressources de transmission de données selon ce mode de réalisation de l'invention est mis en oeuvre dans le point d'accès AP gérant par exemple 3 canaux (C1, C2, C3). Une première phase d'association et d'authentification 21 comprend une étape d'association 22 qui consiste à attribuer à un terminal T un identifiant AID unique. Cet identifiant AID est partagé par, ou à la disposition de tous les canaux gérés par le point d'accès à savoir C1, C2, C3. Ainsi, le point d'accès AP mutualise l'information relative à l'identité du terminal T pour l'ensemble des canaux C1, C2, C3 qu'il a en gestion. En d'autres termes, même si le terminal T est placé sur le canal C1, les canaux C2 et C3 connaissent l'identité de ce terminal T.

Le point d'accès AP peut également gérer un ou plusieurs autres terminaux (non représentés), en optimisant indépendamment le basculement de chacun des terminaux sur un canal donné.

La phase d'association et d'authentification 21 peut comprendre également une étape d'échange 23 d'au moins une clé de cryptage K entre le point d'accès AP et le terminal T. Une fois cet échange effectué, le terminal T est identifié et associé au point d'accès AP et l'échange de clé de cryptage est valide quel que soit le canal associé au terminal T. En d'autres termes, la clé de cryptage K échangée est conservée après un basculement du terminal sur un autre canal géré par le point d'accès AP. En cas de basculement du terminal T, il n'est donc plus nécessaire de procéder à un nouvel échange de clé.

Ainsi, l'unique phase d'association et d'authentification 21 entre le terminal T et le point d'accès AP gérant plusieurs canaux permet d'optimiser le temps de basculement, car aucune réassociation ni réauthentification du terminal n'est nécessaire lors du basculement du terminal sur un nouveau canal géré par le point d'accès AP.

Le point d'accès met également en oeuvre une phase de gestion de l'ensemble des canaux par le point d'accès AP. Cette phase de gestion 24 comprend une étape de détection 25 d'un basculement du terminal T rattaché au point d'accès AP depuis un premier canal, dit canal d'origine, vers un second canal dit canal de destination.

Par exemple, si le terminal T a basculé du canal C1 vers le canal C2, une fois le basculement détecté (25), le point d'accès AP met à jour (26) une table de référence Tbᵣ pour associer le terminal T avec le canal C2. Cette détection est par exemple obtenue lorsque le terminal T, auparavant présent sur le canal C1, envoie une trame de donnée au point d'accès AP en utilisant C2. Le point d'accès reçoit la trame de données et vérifie l'identité du terminal émetteur. Il reconnaît alors l'AID du terminal T et détecte alors que celui-ci a basculé du canal C1 au canal C2. En conséquence le point d'accès modifie la table de référence Tbᵣ et indique que le terminal T n'est plus associé au canal C1 mais est désormais associé au canal C2. On obtient alors une table de référence actualisée Tbᵣᵤ qui est utilisée comme référence lorsque le point d'accès détecte un nouveau basculement.

Par ailleurs, selon certains modes de réalisation, le point d'accès, connaissant la disponibilité de l'ensemble des canaux qu'il a en gestion, peut détecter la nécessité de faire basculer le terminal T. Dans ce cas, il émet (27) sur le canal C1 une commande C_{B} de changement de canal alloué au terminal T, afin que celui-ci bascule sur le canal C3 par exemple. La commande C_{B} contient l'AID du terminal T, si bien que le terminal T étant placé sur C1 comprend que cette commande de basculement lui est destinée.

Pour des raisons de simplicité, le traitement d'un seul terminal du procédé selon l'invention est représentée. Dans certains cas, la même approche peut être mise en oeuvre pour un sous-ensemble de terminaux parmi l'ensemble des terminaux associés à un même canal géré par le point d'accès. Ces sous-ensembles peuvent être prédéfinis, ou définis par le point d'accès à un instant donné.

On présente maintenant, en relation avec la figure 3, la structure détaillée de la commande de changement de canal, selon un mode de réalisation particulier.

### 5.2 Description détaillée d'une commande de changement de canal

On considère, en relation avec la figure 3, une commande de changement de canal selon l'invention, qui peut être émise dans le signal émis par le point d'accès sur un canal donné. Cette commande contient l'identifiant 350 d'un ou de plusieurs terminaux dont le basculement est nécessaire, ou une information désignant ce ou ces terminaux (par exemple sous la forme d'un champ bitmap, comme précisé ci-après).

Une commande de changement de canal contient plusieurs octets, par exemple :
- un octet 31 indiquant la nature de la commande ;
- un octet 32 indiquant l'action de la commande ;
- cinq octets 33 indiquant les caractéristiques du canal de destination du basculement, par exemple, l'identifiant caractérisant la structure des données de la commande, le nombre 332 de bits nécessaires au codage de ces données, le mode de basculement 333, le numéro 334 du canal de destination, le temps 335 avant que le basculement soit effectué, exprimé en nombre de balises (en anglais « *beacon »*)*.*

La commande de changement de canal selon l'invention comprend en outre le champ 350 permettant d'identifier le terminal qui va basculer.

Selon une première variante, ce champ 350 contient par exemple deux informations, correspondant respectivement à un champ 34 indiquant la longueur de bits sur lequel est codé l'AID du terminal qui va changer de canal, et le champ correspondant à l'identifiant AID du terminal qui va basculer, par exemple codé en binaire.

Selon une deuxième variante, on considère qu'il y a Z terminaux sur un même canal, numérotés de 0 à Z-1. Il est proposé d'utiliser un champ bitmap 35 de longueur 34 égale à Z où le Nième bit correspond au Nième terminal parmi les Z terminaux présents sur le même canal d'origine. La valeur du bit indique si le terminal est concerné par le changement de canal. Il est ainsi aisé de transmettre la commande de basculement à un sous-ensemble de terminaux, en une seule commande.

Par exemple, on considère qu'il y a Z=5 terminaux T1, T2, T3, T4, T5 sur le canal C1 et que le point d'accès AP veut émettre une commande visant à faire basculer uniquement M=2 terminaux, par exemple les terminaux T2 et T4, sur un canal C2. Ainsi, le champ 34 indiquera que la longueur du champ bitmap est de 5, et le champ bitmap prendra par exemple la forme suivante :

| | | | | |
|---|---|---|---|---|
| 0 | 1 | 0 | 1 | 0 |

La valeur 0 correspond à un maintien des terminaux T1, T3 et T5 sur le canal C1, et la valeur 1 correspond au basculement des terminaux T2 et T4 sur le canal C2.

Par ailleurs, tant que le basculement de canal n'a pas été effectué il est possible de répéter à chaque émission de balise sur le canal d'origine, la commande de changement de canal selon l'invention. Par exemple, dans le cas où le basculement n'est effectué qu'au bout de trois balises, c'est-à-dire que le champ 335 indique que le basculement de canal aura lieu au bout de trois balises, on peut rappeler sur le canal d'origine au sein des trois balises la commande de changement de canal selon l'invention.

Pour que le basculement soit rapide, en d'autres termes pour que directement après le basculement, le terminal puisse poursuivre sa transmission, il faut que le terminal reçoive la balise du canal de destination quasi immédiatement après le basculement.

Classiquement, les balises sont envoyées tous les 100 ms sur un canal donné et la commande de changement de canal est envoyée juste avant la transmission d'une balise sur le canal d'origine. En conséquence, si le point d'accès gère des canaux asynchrones, ce qui est notamment envisagé dans les futures normes 802.11ac et 802.11ad, le délai avant que le terminal ayant basculé puisse retransmettre peut être long.

Par ailleurs, le champ 350 comprend en outre l'identifiant 36 du point d'accès dans ce canal (BSSID). Ainsi, selon un mode de réalisation, l'identifiant du point d'accès peut être, le cas échéant, modifié.

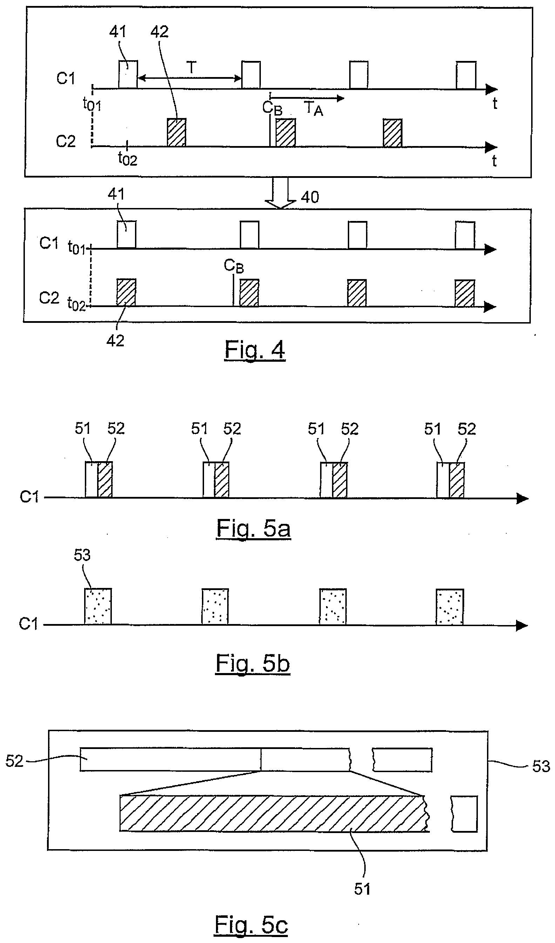

On présente maintenant, en relation avec les figures 4, 5a à 5c, un mode de réalisation de l'invention mettant en oeuvre des canaux asynchrones permettant de réduire ce délai.

### 5.3 Description d'un mode de réalisation de l'invention mettant en oeuvre des canaux asynchrones

### 5.3.1 Première variante mettant en oeuvre des canaux asynchrones

Par canaux asynchrones, on considère des canaux ayant des modes d'accès CSMA-CA différents d'un canal à un autre, c'est-à-dire que les balises (en anglais « *beacons* ») de chaque canal portent par exemple des informations différentes. Ces informations peuvent permettre notamment de connaître l'état du canal, par exemple l'identité du point d'accès (BSSID pour, en anglais, « *Basic Service Set Identification* »), la bande de fréquence, le numéro du canal dans cette bande de fréquence, les options supportées par les couches PHY/MAC.

La figure 4 représente par exemple deux canaux C1 et C2 sur lesquels le point d'accès envoie des balises 41 et 42 ayant des caractéristiques différentes. En l'occurrence, la figure 4 montre que les balises 41 et 42 sont émises par le point d'accès avec des temps de départ t₀₁ et t₀₂ différents.

En conséquence, si le point d'accès émet juste avant la balise 42 une commande C_{B} de changement de canal sur le canal d'origine C2 vers le canal de destination C1, le terminal qui bascule sur C1 devra attendre un temps T_{A} pour pouvoir à nouveau transmettre sur le canal C1.

L'invention propose, pour réduire cette attente, une étape de synchronisation (40) des temps de départ t₀₁ et t₀₂, afin d'obtenir une émission simultanée ou quasi-simultanée, des balises 41 et 42.

Selon un autre mode de réalisation (non représenté) cette synchronisation peut également correspondre à appliquer un intervalle de temps T identique séparant l'émission de deux balises successives 41 et respectivement 42, si ces intervalles sont à l'origine différents.

### 5.3.2 Deuxième variante mettant en oeuvre des canaux asynchrones proposant un basculement quasi-instantané

Selon un autre aspect particulier de l'invention, on cherche à accélérer encore le basculement d'un terminal d'un canal d'origine vers un canal de destination.

Pour ce faire, on prévoit, comme illustrée par la figure 5a, une émission par le point d'accès sur le canal d'origine C1 d'une information 51 relative à l'état d'au moins un canal distinct du canal C1, le canal distinct correspondant au canal de destination du basculement. Cette information 51 relative à l'état du canal de destination peut correspondre à la balise, ou à une partie de la balise (une sélection des informations utiles), du canal de destination, ladite balise étant différente de la balise 52 du canal C1 d'origine.

Selon un aspect particulier de l'invention représenté par les figures 5b et 5c, l'information 51 relative à l'état du canal de destination peut être directement intégrée, par encapsulation, dans la balise 52 du canal d'origine. On obtient ainsi une seule entité de données 53 qui correspond, par exemple selon la figure 5c, à l'insertion de l'information 51 relative à l'état du canal de destination dans la balise 52 du canal C1.

### 5.5 Description détaillée d'un procédé de basculement mis en oeuvre dans un terminal selon l'invention

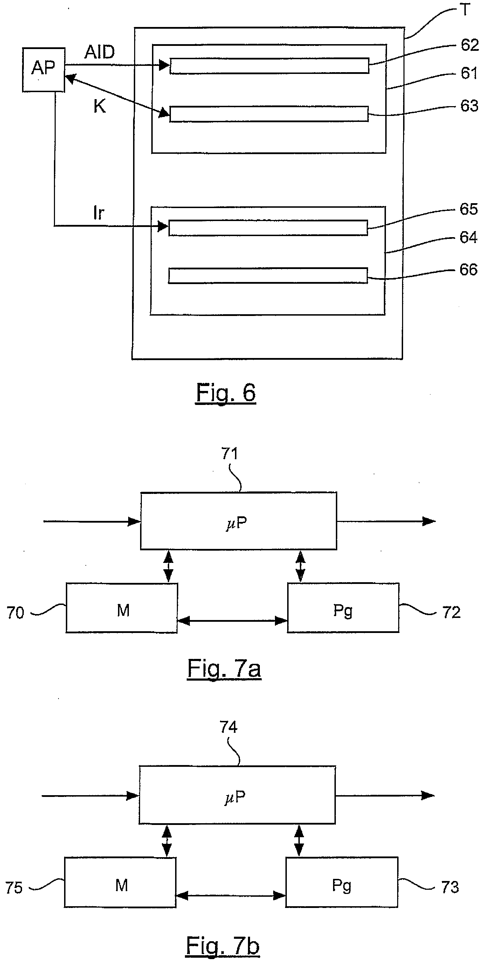

On présente en relation avec la figure 6, le procédé de basculement mis en oeuvre dans un terminal T selon un mode de réalisation de l'invention.

Ainsi, lors d'une phase d'association et d'authentification 61 avec le point d'accès AP gérant au moins deux canaux de communication, le terminal T obtient (62) un identifiant unique AID. L'identifiant unique AID est indépendant du canal utilisé à un instant donné.

Le terminal T échange (63) également une clé de cryptage K avec le point d'accès ce qui lui permet de s'authentifier. En conséquence, grâce à cette phase d'association et d'authentification (61), l'identité du terminal T est mutualisée et connue, ou à la disposition, de l'ensemble des canaux gérés par le point d'accès, ce qui lui permet de basculer d'un canal à un autre sans renégociation de ces informations au niveau du canal de destination.

Une fois l'association au point d'accès effectuée, une phase de gestion de basculement (64) est activée, pendant laquelle le terminal peut changer de canal, en cas de besoin. Pour ce faire, le terminal détermine (65) un canal de destination de son basculement, parmi les canaux gérés par le point d'accès auquel il est rattaché.

L'invention propose deux variantes dans le terminal permettant de déterminer le canal de destination d'un éventuel basculement. Ces deux variantes ne sont pas exclusives l'une de l'autre, et peuvent donc, dans certains modes de réalisation, être mises en oeuvre l'une et l'autre.

Selon une première variante, le terminal reçoit une commande de changement de canal alloué audit terminal, comprenant l'identifiant AID du terminal, ou une information permettant de repérer ce terminal (par exemple le champ « *bitmap »* déjà décrit) et un identifiant du canal de destination. C'est donc le point d'accès qui, selon cette variante, prend la décision du basculement, par exemple après analyse de la charge sur les différents canaux qu'il gère, pour optimiser l'utilisation des ressources disponibles.

Selon une deuxième variante, le terminal peut décider de lui-même de changer de canal. Pour cela, il doit recevoir sur le canal d'origine au moins une information relative à l'état d'au moins un autre canal géré par le point d'accès. Cette information peut notamment être la balise de cet autre canal, transmise par exemple encapsulée dans la balise du canal d'origine, comme décrit précédemment.

Le terminal traite cette information et évalue si un autre canal, dit de destination, distinct du canal d'origine, est plus adapté à sa transmission et décide en conséquence, de lui-même, de basculer ou non vers ce canal distinct qu'il détermine alors comme son canal de destination.

Selon cette approche particulière de l'invention, le terminal peut recevoir les informations relatives à plusieurs canaux gérés par le point d'accès auquel il est rattaché, voire l'ensemble des canaux gérés par le point d'accès. Le traitement effectué par le terminal, certes plus complexe, permet alors de déterminer le meilleur canal pour effectuer sa transmission.

Une fois ce canal de destination déterminé, le terminal bascule (66) vers le canal de destination. Une fois sur le canal de destination, le terminal émet des données vers le point d'accès, contenant son identifiant AID. Le point d'accès peut ainsi prendre connaissance du basculement effectif du terminal et mettre à jour une table de référence associant le terminal T, identifié par son unique identifiant AID, au canal de destination précédemment déterminé.

### 5.6 Structure d'un point d'accès

On présente, en relation avec la figure 7a, la structure simplifiée d'un point d'accès selon les modes de réalisation décrits ci-dessus.

Un tel point d'accès comprend une mémoire 70 comprenant une mémoire tampon, une unité de traitement 71, équipée par exemple d'un microprocesseur *µ*P, et pilotée par le programme d'ordinateur 72, mettant en oeuvre le procédé d'allocation de ressources de transmission de données selon l'invention.

A l'initialisation, les instructions de code du programme d'ordinateur 72 sont par exemple chargées dans une mémoire RAM avant d'être exécutées par le processeur de l'unité de traitement 71. L'unité de traitement 71 reçoit en entrée des signaux d'une pluralité de canaux. Le microprocesseur de l'unité de traitement 71 met en oeuvre les étapes du procédé d'allocation de ressources de transmission de données décrit précédemment, selon les instructions du programme d'ordinateur 72.

Pour cela, le point d'accès comprend, outre la mémoire tampon 70, des moyens d'association et d'authentification d'un terminal avec ledit point d'accès, associant audit terminal un identifiant unique dans ledit point d'accès, des moyens de gestion dudit ensemble de canaux, mettant en oeuvre une table de référence associant à un terminal, identifié par son identifiant unique, un desdits canaux, des moyens de détection d'un basculement d'un terminal rattaché audit point d'accès, depuis un premier canal, dit canal d'origine, vers un second canal, dit canal de destination, et des moyens de mise à jour de ladite table de référence pour associer l'identifiant unique dudit terminal audit canal de destination. Ces moyens sont pilotés par le microprocesseur de l'unité de traitement 71.

### 5.7 Structure d'un terminal

On présente finalement, en relation avec la figure 7b, la structure simplifiée d'un terminal selon les modes de réalisation décrits ci-dessus.

Un tel terminal comprend une mémoire 75 comprenant une mémoire tampon, une unité de traitement 72, équipée par exemple d'un microprocesseur *µ*P, et pilotée par le programme d'ordinateur 73, mettant en oeuvre le procédé de basculement selon l'invention.

A l'initialisation, les instructions de code du programme d'ordinateur 73 sont par exemple chargées dans une mémoire RAM avant d'être exécutées par le processeur de l'unité de traitement 74. L'unité de traitement 74 reçoit en entrée une information d'un point d'accès gérant au moins deux canaux de communication. Le microprocesseur de l'unité de traitement 74 met en oeuvre les étapes du procédé de sélection décrit précédemment, selon les instructions du programme d'ordinateur 73.

Pour cela, le point d'accès comprend, outre la mémoire tampon 75, des moyens d'association et d'authentification avec ledit point d'accès, comprenant des moyens d'obtention d'un identifiant unique dans ledit point d'accès, et des moyens de gestion du basculement mettant en oeuvre des moyens de détermination d'un canal de destination géré par ledit point d'accès, par traitement d'au moins une information reçue dudit point d'accès et des moyens de basculement de la transmission de données dudit canal d'origine vers ledit canal de destination déterminé, sans modification dudit identifiant. Ces moyens sont pilotés par le microprocesseur de l'unité de traitement 74.

## Revendications

1. Procédé d'allocation de ressources de transmission de données dans un réseau de communication comprenant au moins un point d'accès (AP) échangeant des données avec au moins un terminal lui étant rattaché, et gérant un ensemble d'au moins deux canaux de communication (C1, C2),
**caractérisé en ce que** ledit point d'accès met en oeuvre une phase d'association et d'authentification (21) d'un terminal (T) avec ledit point d'accès (AP), comprenant une étape d'association (22) audit terminal d'un identifiant unique (AID) dans ledit point d'accès,
et une phase de gestion (24) dudit ensemble de canaux, mettant en oeuvre une table de référence (Tbᵣ) associant à un terminal, identifié par son identifiant unique, un desdits canaux, ladite phase de gestion comprenant les étapes suivantes :
- détection (25) d'un basculement d'un terminal rattaché audit point d'accès, depuis un premier canal, dit canal d'origine, vers un second canal, dit canal de destination ;
- mise à jour (26) de ladite table de référence pour associer l'identifiant unique dudit terminal audit canal de destination.

2. Procédé d'allocation selon la revendication 1, **caractérisé en ce que** ladite phase d'association et d'authentification comprend également une étape d'échange (23) d'au moins une clé de cryptage (K) entre ledit point d'accès (AP) et ledit terminal (T), la ou lesdites clés de cryptage étant communes pour ledit ensemble de canaux.

3. Procédé d'allocation selon la revendication 1, **caractérisé en ce qu'**il comprend, dans ledit point d'accès, une étape d'émission (27) sur ledit canal d'origine d'une commande (C_{B}) de changement de canal alloué à un terminal rattaché audit point d'accès, ladite commande de changement de canal alloué comprenant au moins ledit identifiant (AID) du terminal et un identifiant dudit canal de destination.

4. Procédé d'allocation selon la revendication 3, **caractérisé en ce que** ladite commande de changement de canal comprend un champ de désignation (350) des terminaux concernés, comprenant une pluralité de bits associés chacun à l'un des terminaux, et prenant une première valeur lorsque le terminal doit effectuer le basculement vers le canal de destination et une seconde valeur lorsqu'il doit conserver le canal d'origine.

5. Procédé d'allocation selon la revendication 1, **caractérisé en ce qu'**il comprend en outre une phase de synchronisation (40) des canaux d'origine et de destination, comprenant une étape d'émission simultanée d'une première balise sur ledit canal d'origine et d'une seconde balise sur ledit canal de destination.

6. Procédé d'allocation selon la revendication 1, **caractérisé en ce qu'**il comprend une étape d'émission, dudit point d'accès vers au moins un terminal rattaché audit point d'accès, sur ledit canal d'origine, d'au moins une information (51) relative à l'état d'au moins un canal distinct dudit canal d'origine.

7. Procédé d'allocation selon la revendication 6, **caractérisé en ce que** ladite au moins une information relative à l'état d'au moins un canal distinct dudit canal d'origine est transmise par encapsulation dans une balise (52) dudit canal d'origine.

8. Point d'accès dans un réseau de communication, échangeant des données avec au moins un terminal lui étant rattaché, et gérant un ensemble d'au moins deux canaux de communication, **caractérisé en ce qu'**il comprend des moyens d'association et d'authentification d'un terminal avec ledit point d'accès, associant audit terminal un identifiant unique dans ledit point d'accès,
et des moyens de gestion dudit ensemble de canaux, mettant en oeuvre une table de référence associant à un terminal, identifié par son identifiant unique, un desdits canaux, et comprenant :
- des moyens de détection d'un basculement d'un terminal rattaché audit point d'accès, depuis un premier canal, dit canal d'origine, vers un second canal, dit canal de destination ;
- des moyens de mise à jour de ladite table de référence pour associer l'identifiant unique dudit terminal audit canal de destination.

9. Terminal d'un réseau de communication, échangeant des données avec un point d'accès selon la revendication 8, auquel il est rattaché, sur un canal de communication, dit canal d'origine, choisi dans un ensemble d'au moins deux canaux de communication, gérés par ledit point d'accès, **caractérisé en ce qu'**il comprend des moyens d'association et d'authentification avec ledit point d'accès, comprenant des moyens d'obtention d'un identifiant unique dans ledit point d'accès,
et des moyens de gestion du basculement mettant en oeuvre :
- des moyens de détermination d'un canal de destination géré par ledit point d'accès, par traitement d'au moins une information reçue dudit point d'accès ;
- des moyens de basculement de la transmission de données dudit canal d'origine vers ledit canal de destination déterminé, sans modification dudit identifiant.

10. Programme d'ordinateur comportant des instructions pour la mise en oeuvre d'un procédé selon la revendication 1 lorsque ce programme est exécuté par un processeur.

11. Signal échangé entre un point d'accès et au moins un terminal pour la mise en oeuvre d'un procédé selon la revendication 1, **caractérisé en ce qu'**il porte des données associant sélectivement au moins un terminal à au moins un canal de destination.

12. Signal selon la revendication 11, **caractérisé en ce qu'**il comprend au moins un des éléments appartenant au groupe comprenant :
- un champ désignant au moins un terminal concerné par une commande de basculement de canal ;
- une balise d'un canal d'origine encapsulant au moins une partie d'au moins une balise d'au moins un autre canal distinct dudit canal d'origine.

## Patentansprüche

1. Verfahren zur Zuteilung von Ressourcen für die Datenübertragung in einem Kommunikationsnetz, das wenigstens einen Zugangspunkt (AP) umfasst, der Daten mit wenigstens einem Endgerät austauscht, das mit ihm verbunden ist, und eine Gesamtheit von wenigstens zwei Kommunikationskanälen (C1, C2) verwaltet,
**dadurch gekennzeichnet, dass** der Zugangspunkt eine Phase der Zuordnung und Authentifizierung (21) eines Endgerätes (T) mit dem Zugangspunkt (AP) durchführt, die einen Schritt der Zuordnung (22) einer eindeutigen Kennung (AID) zu dem Endgerät in dem Zugangspunkt umfasst,
und eine Phase der Verwaltung (24) der Gesamtheit von Kanälen unter Verwendung einer Referenztabelle (Tbᵣ), die einem durch seine eindeutige Kennung identifizierten Endgerät einen der Kanäle zuordnet, wobei die Phase der Verwaltung die folgenden Schritte umfasst:
- Erkennung (25) einer Umschaltung eines Endgerätes, das mit dem Zugangspunkt verbunden ist, von einem ersten Kanal, Ursprungskanal genannt, zu einem zweiten Kanal, Zielkanal genannt;
- Aktualisierung (26) der Referenztabelle, um die eindeutige Kennung des Endgerätes dem Zielkanal zuzuordnen.

2. Verfahren zur Zuteilung nach Anspruch 1, **dadurch gekennzeichnet, dass** die Phase der Zuordnung und Authentifizierung außerdem einen Schritt des Austausches (23) wenigstens eines Verschlüsselungsschlüssels (K) zwischen dem Zugangspunkt (AP) und dem Endgerät (T) umfasst, wobei der oder die Verschlüsselungsschlüssel der Gesamtheit von Kanälen gemeinsam sind.

3. Verfahren zur Zuteilung nach Anspruch 1, **dadurch gekennzeichnet, dass** es in dem Zugangspunkt einen Schritt des Sendens (27), auf dem Ursprungskanal, eines Befehls (C_{B}) zum Wechsel eines Kanals, der einem mit dem Zugangspunkt verbundenen Endgerät zugeteilt ist, umfasst, wobei dieser Befehl zum Wechsel eines zugeteilten Kanals wenigstens die Kennung (AID) des Endgerätes und eine Kennung des Zielkanals umfasst.

4. Verfahren zur Zuteilung nach Anspruch 3, **dadurch gekennzeichnet, dass** der Befehl zum Kanalwechsel ein Feld zur Bezeichnung (350) der betroffenen Endgeräte umfasst, welches mehrere Bits umfasst, die jeweils einem der Endgeräte zugeordnet sind und einen ersten Wert annehmen, wenn das Endgerät die Umschaltung zum Zielkanal durchführen soll, und einen zweiten Wert, wenn es den Ursprungskanal beibehalten soll.

5. Verfahren zur Zuteilung nach Anspruch 1, **dadurch gekennzeichnet, dass** es außerdem eine Phase der Synchronisation (40) der Ursprungs- und Zielkanäle umfasst, die einen Schritt des gleichzeitigen Sendens einer ersten Bake auf dem Ursprungskanal und einer zweiten Bake auf dem Zielkanal umfasst.

6. Verfahren zur Zuteilung nach Anspruch 1, **dadurch gekennzeichnet, dass** es einen Schritt des Sendens wenigstens einer Information (51), die sich auf den Zustand wenigstens eines vom Ursprungskanal verschiedenen Kanals bezieht, vom Zugangspunkt zu wenigstens einem mit dem Zugangspunkt verbundenen Endgerät auf dem Ursprungskanal umfasst.

7. Verfahren zur Zuteilung nach Anspruch 6, **dadurch gekennzeichnet, dass** die wenigstens eine Information, die sich auf den Zustand wenigstens eines vom Ursprungskanal verschiedenen Kanals bezieht, durch Einkapselung in eine Bake (52) des Ursprungskanals übertragen wird.

8. Zugangspunkt in einem Kommunikationsnetz, der Daten mit wenigstens einem Endgerät austauscht, das mit ihm verbunden ist, und eine Gesamtheit von wenigstens zwei Kommunikationskanälen verwaltet, **dadurch gekennzeichnet, dass** er Mittel zur Zuordnung und Authentifizierung eines Endgerätes mit dem Zugangspunkt umfasst, die dem Endgerät eine eindeutige Kennung in dem Zugangspunkt zuordnen,
und Mittel zur Verwaltung der Gesamtheit von Kanälen, die eine Referenztabelle verwenden, welche einem durch seine eindeutige Kennung identifizierten Endgerät einen der Kanäle zuordnet, und umfassen:
- Mittel zur Erkennung einer Umschaltung eines Endgerätes, das mit dem Zugangspunkt verbunden ist, von einem ersten Kanal, Ursprungskanal genannt, zu einem zweiten Kanal, Zielkanal genannt;
- Mittel zur Aktualisierung der Referenztabelle, um die eindeutige Kennung des Endgerätes dem Zielkanal zuzuordnen.

9. Endgerät eines Kommunikationsnetzes, welches Daten mit einem Zugangspunkt nach Anspruch 8, mit dem es verbunden ist, auf einem Kommunikationskanal, Ursprungskanal genannt, austauscht, der aus einer Gesamtheit von wenigstens zwei Kommunikationskanälen ausgewählt ist, die von dem Zugangspunkt verwaltet werden,
**dadurch gekennzeichnet, dass** es Mittel zur Zuordnung und Authentifizierung mit dem Zugangspunkt umfasst, welche Mittel zur Gewinnung einer eindeutigen Kennung in dem Zugangspunkt umfassen, sowie Mittel zur Verwaltung der Umschaltung, welche einsetzen:
- Mittel zur Bestimmung eines Zielkanals, der von dem Zugangspunkt verwaltet wird, durch Verarbeitung wenigstens einer Information, die von dem Zugangspunkt empfangen wurde;
- Mittel zur Umschaltung der Übertragung von Daten von dem Ursprungskanal zu dem bestimmten Zielkanal ohne Änderung der Kennung.

10. Computerprogramm, welches Anweisungen zur Durchführung eines Verfahrens nach Anspruch 1, wenn dieses Programm von einem Prozessor ausgeführt wird, umfasst.

11. Signal, welches zwischen einem Zugangspunkt und wenigstens einem Endgerät zur Durchführung eines Verfahrens nach Anspruch 1 ausgetauscht wird, **dadurch gekennzeichnet, dass** es Daten transportiert, die selektiv wenigstens ein Endgerät wenigstens einem Zielkanal zuordnen.

12. Signal nach Anspruch 11, **dadurch gekennzeichnet, dass** es wenigstens eines der Elemente umfasst, die zu der Gruppe gehören, welche umfasst:
- ein Feld, das wenigstens ein Endgerät bezeichnet, das von einem Befehl zur Umschaltung eines Kanals betroffen ist;
- eine Bake eines Ursprungskanals, die wenigstens einen Teil wenigstens einer Bake wenigstens eines anderen Kanals, der von dem Ursprungskanal verschieden ist, einkapselt.

## Claims

1. Method for allocating data transmission resources in a communication network comprising at least one access point (AP) exchanging data with at least one terminal attached thereto, and managing a set of at least two communication channels (C1, C2),
**characterized in that** said access point implements a phase (21) of associating and authenticating a terminal (T) with said access point (AP), comprising a step (22) of associating, with said terminal, a unique identifier (AID) in said access point,
and a phase (24) of managing said set of channels, implementing a reference table (Tbᵣ) associating, with a terminal, identified by its unique identifier, one of said channels, said management phase comprising the following steps:
- detecting (25) a switch of a terminal attached to said access point from a first channel, termed original channel, to a second channel, termed destination channel;
- updating (26) said reference table to associate the unique identifier of said terminal with said destination channel.

2. Allocation method according to Claim 1, **characterized in that** said association and authentication phase also comprises a step (23) of exchanging at least one encryption key (K) between said access point (AP) and said terminal (T), said encryption key(s) being common for said set of channels.

3. Allocation method according to Claim 1, **characterized in that** it comprises, in said access point, a step (27) of transmitting, on said original channel, a command (C_{B}) to change a channel allocated to a terminal attached to said access point, said allocated channel change command comprising at least said identifier (AID) of the terminal and an identifier of said destination channel.

4. Allocation method according to Claim 3, **characterized in that** said channel change command comprises a designation field (350) for the terminals in question, comprising a plurality of bits each associated with one of the terminals, and adopting a first value when the terminal has to switch to the destination channel and a second value when it has to keep the original channel.

5. Allocation method according to Claim 1, **characterized in that** it furthermore comprises a phase (40) of synchronizing the original and destination channels, comprising a step of simultaneously transmitting a first beacon on said original channel and a second beacon on said destination channel.

6. Allocation method according to Claim 1, **characterized in that** it comprises a step of transmitting, from said access point to at least one terminal attached to said access point, on said original channel, at least one item of information (51) relating to the state of at least one channel different from said original channel.

7. Allocation method according to Claim 6, **characterized in that** said at least one item of information relating to the state of at least one channel different from said original channel is transmitted by encapsulation in a beacon (52) of said original channel.

8. Access point in a communication network, exchanging data with at least one terminal attached thereto, and managing a set of at least two communication channels, **characterized in that** it comprises means for associating and authenticating a terminal with said access point, associating, with said terminal, a unique identifier in said access point,
and means for managing said set of channels, implementing a reference table associating, with a terminal, identified by its unique identifier, one of said channels, and comprising:
- means for detecting a switch of a terminal attached to said access point from a first channel, termed original channel, to a second channel, termed destination channel;
- means for updating said reference table to associate the unique identifier of said terminal with said destination channel.

9. Terminal of a communication network, exchanging data with an access point according to Claim 8, to which it is attached, on a communication channel, termed original channel, chosen from a set of at least two communication channels, managed by said access point, **characterized in that** it comprises means for associating and authenticating with said access point, comprising means for acquiring a unique identifier in said access point,
and means for managing the switch implementing:
- means for determining a destination channel managed by said access point, by processing at least one item of information received from said access point;
- means for switching the transmission of data from said original channel to said determined destination channel, without modification of said identifier.

10. Computer program including instructions for implementing a method according to Claim 1 when this program is executed by a processor.

11. Signal exchanged between an access point and at least one terminal for implementing a method according to Claim 1, **characterized in that** it carries data selectively associating at least one terminal with at least one destination channel.

12. Signal according to Claim 11, **characterized in that** it comprises at least one of the elements belonging to the group comprising:
- a field designating at least one terminal affected by a channel switch command;
- a beacon of an original channel encapsulating at least part of at least one beacon of at least one other channel different from said original channel.
